# EUROPEAN PATENT SPECIFICATION

(11) **EP 0 646 756 B1**
(45) Date of publication and mention of the grant of the patent: **17.02.1999**
(21) Application number: 94202659.2
(22) Date of filing: 15.09.1994
(51) Int. Cl.: F25J 3/08, C01B 31/20, C12F 3/02

(54) **A method for preparing pure, gaseous carbon dioxide and an apparatus to be used therewith**
Herstellungsverfahren von reinem, gasförmigem Kohlendioxid und Apparat zum Gebrauch dafür
Procédé de la préparation de gaz de dioxyde de carbone pur et dispositif utilisé pour la mise en oeuvre

(30) Priority: 24.09.1993 NL 9301648
(43) Date of publication of application: 05.04.1995
(73) Proprietor: Haffmans B.V., NL-5902 RD Venlo (NL)
(72) Inventor: Haffmans, Hubertus Ernest Ferdinand Marie, NL-5911 EE Venlo (NL)
(74) Representative: Van kan, Johan Joseph Hubert, Ir.

(56) References cited:
- EP-A- 0 194 795
- DE-A- 2 130 774
- FR-A- 2 158 338
- CHEMICAL ABSTRACTS, vol. 100, no. 12, 19 March 1984, Columbus, Ohio, US; abstract no. 88081u, SHOWA DENKO K.K. 'Liquefied carbon dioxide from fuel combustion flue gas' page 134 ;column 1 ; & JP-A-58 208 117 (SHOWA DENKO K.K.)
- H. Hausen, H. Linde "Tieftemperaturtechnik", 2nd edition, Springer Verlag, Berlin, Heidelberg, Tokyo, New York, 1985, pages 344 to 347

## Description

The invention relates to a method for preparing pure, gaseous CO₂ from a gaseous CO₂-containing basic material having a lower degree of purity than the final product, by compressing and cooling the gaseous basic material, liquefying it by using purified liquid CO₂ as a cooling medium whereupon the gaseous impurities are discharged from the liquefied gaseous basic material and the vaporised purified liquid CO₂ is supplied to a consumer. The invention furthermore relates to an apparatus for carrying out said method; said apparatus consisting of at least two compressors, two coolers and purification equipment which are interconnected via piping suitable for that purpose.

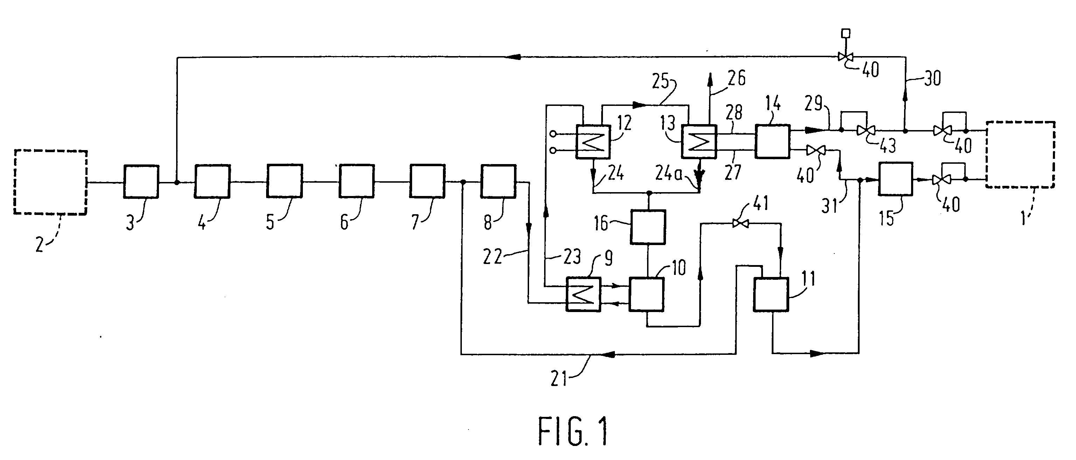

A method and an apparatus of this type are known from European Patent Application No. 194,795. The method as it is known from the aforesaid European Patent Application shows the preparation of liquid carbon dioxide, whereby the pure liquid carbon dioxide formed in the course of the implementation of the method is used as the cooling medium for the preparation of gaseous carbon dioxide. The use of liquid carbon dioxide as a cooling medium is for example important in a beer brewing plant, because if other, usual cooling agents are used, such as ammonia or chlorofluorocarbons, there is a danger that the desired pure carbon dioxide as the final product is contaminated with cooling agent. Although liquid carbon dioxide formed in the course of the preparation is used as the cooling agent in the aforesaid European Patent Application, another cooling agent is furthermore used in cooling unit 20, as shown in Figure 1 of the aforesaid European Patent Application. Furthermore it has appeared to be possible to enhance the efficiency of the preparation process of purified, gaseous carbon dioxide in comparison with the efficiency that can be achieved in practice by using the aforesaid known method.

The method according to the invention is characterized in that the compression of the gaseous basic material is performed in at least two stages to a final pressure of 40 - 65 bar, said purified liquid CO₂ is expanded to the suction pressure of the compressor of the last stage, whereupon the gaseous CO₂ thus obtained is fed back as flash gas to the supply pipe of the compressor of the last stage, said liquid purified CO₂ fraction is used to liquefy said gaseous basic material. Furthermore it is to be preferred to use cooling water, ice water or another cooling agent, such as alcohol or propene glycol, to the exclusion of chlorofluorocarbons or ammonia, besides liquid, purified CO₂ as the cooling agent. The increasing of the pressure of gaseous, impure CO₂ to a pressure of 40 - 65 bar takes place immediately before liquid carbon dioxide is formed wherein the compression of the gaseous basic material is performed in two stages, in the first compressing step to a pressure of about 14-22 bar and in the second compressing step to a pressure of 40-65 bar.

The invention will be explained in more detail with reference to the following description, wherein reference is made to the appended drawing, in which:

Figure 1 shows a block diagram of the various steps for carrying out the method according to the invention.

Figure 1 illustrates in a block diagram the steps for carrying out the method according to the invention, whereby air-containing carbon dioxide in gaseous, impure condition is obtained in vessel 2. The carbon dioxide obtained in vessel 2 may have a degree of purity of about 80% and contains air to the amount of about 20 per cent by volume. From this carbon dioxide having a purity of at least about 99.9 per cent by volume is obtained, which may be used in for example the preparation of beer. The unpurified carbon dioxide is caught in the receptacle 3 and subjected to a first compressing step in compressor 4 to about 14 - 22 bar. After cooling, drying and absorbing impurities such as interfering aromatics in parts 5, 6 and 7 respectively, an important step according to the invention takes place in compressor 8, where the prepurified gas is further compressed to a pressure of 40 - 65 bar. After leaving the compressor 8 the compressed gas is led to reboiler 9, via pipe 22, without further cooling, said reboiler 9 being in communication with the collecting vessel 10, in which compressed liquid carbon dioxide is collected at a pressure of 40 - 65 bar. From the reboiler 9 the compressed CO₂ is led to cooler 12 via pipe 23, where it is cooled with ice water. Cooler 12 is in communication with the heat exchanger 13, which is cooled with liquid CO₂ from the collecting vessel 11, Which is supplied to an apparatus 14 for expanding carbon dioxide, so that a temperature of for example - 45 °C is produced at 14. The heat exchanger 13 is of a pipe-jacket type, whereby the expanded carbon dioxide is supplied via pipe 27 and discharged via pipe 28, whilst the carbon dioxide to be cooled is supplied to the heat exchanger 13 via pipe 25 and discharged via pipe 24a.

The gaseous impurities, such as air, are discharged from the heat exchanger 13 via pipe 26, so that liquid carbon dioxide is discharged to the stripper 16 via the pipe 24a, in order for the liquid CO₂ to be purified. Said purified liquid CO₂ is collected in the collecting vessel 10. When the level in vessel 10 rises, the valve 41 is opened, as a result of which said liquid CO₂ expands from a pressure of 40 - 65 bar to a pressure of 14 - 22 bar. The gaseous CO₂ thus obtained is fed back as flash-gas to a place before the compressor 8 via pipe 21, whilst the liquid CO₂ remains behind. The gaseous carbon dioxide which is formed at 14 is supplied, as a gaseous carbon dioxide in purified condition, to the place of consumption 1 of purified CO₂ via the pipe 29 and the valves 43 and 40, whereby it is possible to feed back part of said gaseous carbon dioxide to the starting point for the apparatus near the receptacle 3 in case there is insufficient demand for purified CO₂ at 1 or if additional cooling is necessary in cooler 13. Via pipe 31 purified carbon dioxide is furthermore supplied to the place of consumption 1 by supplying liquid carbon dioxide to the evaporator 15, whereupon gaseous, purified carbon dioxide is formed. The method may furthermore be controlled by means of various valves and cocks 40 indicated in the drawing. It will be apparent, however, that these are shown by way of indication only and that the principle of implementing the method according to the invention can only be derived from the block diagram.

The invention furthermore relates to the apparatus for implementing the method, whereby the apparatus is partly known from European Patent Application No. 194,795.

The apparatus according to the invention is characterized in that two compressors (4, 8) are placed before the coolers (12, 13), said coolers (12, 13) being connected to an expansion means (10, 41, 11) for preparing flash gas and purified liquid CO₂, wherein a pipe (21) is provided for feeding back flash gas to the supply pipe of the compressor (8) of the last stage and wherein a pipe (31) is provided for supplying purified carbon dioxide to said second cooler (13) for liquefying the gaseous basic material.

## Claims

1. A method for preparing a pure, gaseous CO₂ from a gaseous CO₂-containing basic material having a lower degree of purity than the final product, by compressing and cooling the gaseous basic material, liquefying it by using purified liquid CO₂ as a cooling medium, whereupon the gaseous impurities are discharged from the liquefied gaseous basic material and the vaporised purified liquid CO₂ is supplied to a consumer, characterized in that the compression of the gaseous basic material is performed in at least two stages to a final pressure of 40 - 65 bar, said purified liquid CO₂ is expanded to the suction pressure of the compressor of the last stage, whereupon the gaseous CO₂ thus obtained is fed back as flash gas to the supply pipe of the compressor of the last stage, said liquid purified CO₂ fraction is used to liquefy said gaseous basic material.

2. A method according to claim 1, characterized in that besides liquid, purified CO₂ also ice water is used as the cooling agent, to the exclusion of chlorofluorocarbons and ammonia.

3. A method according to claims 1-2, characterized in that the compression of the gaseous basic material is performed in two stages, in the first compressing step to a pressure of about 14-22 bar and in the second compressing step to a pressure of 40-65 bar.

4. An apparatus for carrying out the method according to claim 1, said apparatus consisting of at least two compressors, two coolers and purification equipment, which are interconnected via piping suitable for that purpose, characterized in that two compressors (4, 8) are placed before the coolers (12, 13), said coolers (12, 13) being connected to an expansion means (10, 41, 11) for preparing flash gas and purified liquid CO₂, wherein a pipe (21) is provided for feeding back flash gas to the supply pipe of the compressor (8) of the last stage and wherein a pipe (31) is provided for supplying purified carbon dioxide to said second cooler (13) for liquefying the basic material.

## Patentansprüche

1. Verfahren zur Herstellung von reinem, gasförmigem CO₂ aus einem gasförmigen, CO₂-enthaltenden Grundmaterial mit einem geringeren Reinheitsgrad als das Endprodukt mittels Verdichten und Kühlen des gasförmigen Grundmaterials, Verflüssigung davon unter Verwendung von gereinigtem, flüssigem CO₂ als ein Kühlmittel, worauf die gasförmigen Verunreinigungen von dem verflüssigten, gasförmigen Grundmaterial abgeführt werden und das verdampfte, gereinigte, flüssige CO₂ einem Verbraucher zugeführt wird, **dadurch gekennzeichnet, daß** die Verdichtung des gasförmigen Grundmaterials zumindest in zwei Stufen auf einen Enddruck von 40 - 65 bar ausgeführt wird, wobei das gereinigte, flüssige CO₂ auf den Saugdruck des Verdichters der letzten Stufe expandiert wird, worauf das somit erhaltene gasförmige CO₂ als Flash-Gas zu dem Zuführrohr des Verdichters der letzten Stufe zurückgeführt wird, wobei die flüssige gereinigte CO₂-Fraktion verwendet wird, um das gasförmige Grundmaterial zu verflüssigen.

2. Verfahren nach Anspruch 1, **dadurch gekennzeichnet, daß** neben flüssigem, gereinigtem CO₂ ebenso Eiswasser als Kühlmittel verwendet wird, um Chlorfluorkohlenwasserstoffe und Ammoniak auszuschließen.

3. Verfahren nach einem der Ansprüche 1 - 2, **dadurch gekennzeichnet, daß** die Verdichtung des gasförmigen Grundmaterials in zwei Stufen ausgeführt wird, in dem ersten Verdichtungsschritt zu einem Druck von ungefähr 14 - 22 bar und in dem zweiten Verdichtungsschritt zu einem Druck von 40 - 65 bar.

4. Vorrichtung zur Auführung des Verfahrens nach Anspruch 1, wobei die Vorrichtung Verdichter umfaßt, zumindest zwei Kühler und eine Reinigungseinrichtung, die über Rohrleitungen, die für diesen Zweck geeignet sind, verbunden sind, **dadurch gekennzeichnet, daß** zwei Verdichter (4, 8) vor den Kühlern (12, 13) angeordnet sind, wobei die Kühler (12, 13) mit einer Expansionseinrichtung (10, 41, 11) verbunden sind, zum Herstellen von Flash-Gas und gereinigtem, flüssigem CO₂, wobei ein Rohr (21) vorgesehen ist, um Flash-Gas zu dem Zuführrohr des Verdichters (8) der letzten Stufe zurückzuführen, und wobei ein Rohr (31) vorgesehen ist, um gereinigtes Kohlendioxid zu dem zweiten Kühler (13) zur Verflüssigung des Grundmaterials zuzuführen.

## Revendications

1. Procédé de préparation de CO₂ gazeux pur à partir d'un matériau de base contenant gazeux du CO₂ présentant un degré de pureté inférieur à celui du produit final, par compression et refroidissement dudit matériau de base gazeux et par liquéfaction en utilisant du CO₂ liquide purifié comme fluide réfrigérant, après quoi, les impuretés gazeuses sont évacuées du matériau de base gazeux liquéfié et le CO₂ liquide purifié vaporisé est livré à un consommateur, caractérisé en ce que la compression du matériau de base gazeux est réalisée en au moins deux étapes jusqu'à une pression finale de 40 à 65 bars, ledit CO₂ liquide purifié est détendu à la pression d'aspiration du compresseur du dernier étage, après quoi, le CO₂ gazeux ainsi obtenu est réintroduit comme gaz d'activation dans la tuyauterie d'alimentation du compresseur du dernier étage, et la fraction dudit CO₂ liquide purifié est utilisée pour liquéfier ledit matériau de base gazeux.

2. Procédé selon la revendication 1, caractérisé en ce qu'en plus du CO₂ liquide purifié, de l'eau glacée est utilisée comme agent réfrigérant à l'exclusion des carbones chlorofluorés et de l'ammoniac.

3. Procédé selon les revendications 1 et 2, caractérisé en ce que la compression du matériau de base gazeux est réalisée en deux étapes, dans la première étape de compression jusqu'à une pression de 14 à 22 bars environ, et dans la seconde étape de compression jusqu'à une pression de 40 à 65 bars.

4. Dispositif destiné à mettre en oeuvre le procédé selon la revendication 1, ledit dispositif étant constitué de compresseurs, d'au moins deux dispositifs de réfrigération et d'un équipement de purification, qui sont interconnectés par l'intermédiaire de tuyauteries appropriées à cet usage, caractérisé en ce que deux compresseurs (4, 8) sont placés avant les dispositifs de réfrigération (12, 13), lesdits dispositifs de réfrigération (12, 13) étant raccordés à un moyen de détente (10, 41, 11) destiné à préparer du gaz d'activation et du CO₂ liquide purifié, dans lequel une tuyauterie (21) est prévue pour réintroduire le gaz d'activation dans la tuyauterie d'alimentation du compresseur (8) du dernier étage et dans lequel une tuyauterie (31) est prévue pour délivrer le dioxyde de carbone purifié audit second dispositif de réfrigération (13) afin de liquéfier le matériau de base.
